# EUROPÄISCHE PATENTSCHRIFT

(11) **EP 2 981 559 B1**
(45) Veröffentlichungstag und Bekanntmachung des Hinweises auf die Patenterteilung: **15.05.2019**
(21) Anmeldenummer: 14712651.0
(22) Anmeldetag: 24.03.2014
(51) Int. Cl.: B01D 1/20, C08F 6/00, C08C 2/06, C08F 6/10, C08F 6/14, B01D 19/00, B01D 45/14, C08F 6/12

(54) **VERFAHREN ZUR ABTRENNUNG EINES POLYMERS AUS EINER POLYMERLÖSUNG ODER -DISPERSION**
METHOD FOR SEPARATION OF A POLYMER FROM A POLYMER SOLUTION OR DISPERSION
PROCÉDÉ DE SÉPARATION D'UN POLYMÈRE D'AVEC UNE SOLUTION OU DISPERSION DE POLYMÈRE

(30) Priorität: 04.04.2013 DE 102013205990
(43) Veröffentlichungstag der Anmeldung: 10.02.2016
(73) Patentinhaber: Fraunhofer-Gesellschaft zur Förderung der angewandten Forschung e.V., 80686 München (DE)
(72) Erfinder: WENDLER, Ulrich, 06118 Halle (DE); VATER, Marcus, 06108 Halle (DE); GEHRHARDT, Carsten, 06217 Merseburg (DE); HERZIG, Frank, 06184 Kabelsketal / OT Gottenz (DE)
(74) Vertreter: Haggenmüller, Christian
(86) Internationale Anmeldenummer: PCT/EP2014/055826
(87) Internationale Veröffentlichungsnummer: WO 2014/161735

(56) Entgegenhaltungen:
- DE-C- 660 046

## Beschreibung

Die vorliegende Erfindung betrifft ein Verfahren zur Abtrennung eines Polymers aus einer Polymerlösung oder -dispersion sowie eine Vorrichtung bzw. Anlage zur Durchführung dieses Verfahrens.

Ein großtechnisch wichtiges Herstellungsverfahren von Polymeren ist die Lösungspolymerisation. Um das Polymer zu gewinnen, ist das Lösungsmittel abzutrennen. Problematisch ist dabei unter anderem, dass in dem Polymermaterial noch organisches Lösungsmittel verbleibt. Da aufgrund gesetzlicher Bestimmungen und strengerer Umweltanforderungen häufig ein sehr geringer Restgehalt an flüchtigen organischen Stoffen gefordert wird, besteht ein Bedarf an effizienten Verfahren zur Abtrennung des Polymers aus einer Polymerlösung. Besonderes Augenmerk liegt auf der Kompaktheit des verfahrenstechnischen Aufbaus sowie der energiesparenden und ressourcenschonenden Durchführung des Prozesses bei weitestgehender Vermeidung einer Produktschädigung.

Bekannt ist, die Lösungsmittelabtrennung bei der Lösungspolymerisation von Polymeren (wie z.B. Elastomeren) über Koagulation/Strippung durchzuführen. Nach einer Zerstäubung mit Wasserdampf wird das erhaltene Gemisch wird in einen gerührten Behälter überführt. Die Polymerpartikel liegen in diesem Behälter in flüssigem Wasser dispergiert vor. Unter Beheizung wird noch verbleibendes Lösungsmittel aus den Polymerpartikeln in die flüssige wässrige Phase überführt und gelangt von dort in den Gasraum. Um das organische Lösungsmittel in ausreichender Menge aus den Polymerpartikeln auszutreiben, ist eine längere Verweilzeit dieser wässrigen Polymer-Suspension in dem gerührten Behälter erforderlich. Die wässrige Polymer-Suspension wird üblicherweise in mindestens einen weiteren Rührbehälter überführt. Dort wird analog zum ersten Apparat (eventuell unter vermindertem Druck) durch Heizenergie eine weitere Ausdampfung des Lösungsmittels aus den Polymerteilchen vorgenommen. Dieses Verfahren ist relativ zeitaufwendig. Die mittlere Polymer-Verweilzeit in einer solchen Anlage kann beispielsweise bis zu 2 Stunden betragen, was wiederum zu einer hohen thermischen Belastung des Polymers führt. Weiterhin müssen solche Anlagen häufig in gewissen Mindestdimensionen ausgeführt werden, um eine stabile Betriebsweise zu gewährleisten. Somit ist für einen rentablen Betrieb ein Mindestdurchsatz erforderlich, eine Mengenanpassung an kleintonnagige (Spezial-)Produkte ist schwierig.

Eine Aufgabe der vorliegenden Erfindung besteht daher in der Bereitstellung eines Verfahrens zur Abtrennung eines Polymers aus einer Polymerlösung, das sich energiesparend und ressourcenschonend bei weitestgehender Vermeidung einer Produktschädigung durchführen lässt und einen kompakten verfahrenstechnischen Aufbau ermöglicht. Eine weitere Aufgabe der vorliegenden Erfindung besteht in der Bereitstellung einer Vorrichtung bzw. Anlage, mit der sich dieses Verfahren möglichst effizient durchführen lässt.

Gelöst wird diese Aufgabe durch ein Verfahren zur Abtrennung eines Polymers aus einer Polymerlösung oder -dispersion, folgende Schritte umfassend:
(i) eine Lösung oder Dispersion eines Polymers in einem organischen Lösungsmittel wird durch in Kontakt bringen mit Wasserdampf in einem Zerstäuberbehälter zerstäubt, wobei ein Teil des organischen Lösungsmittels in die Gasphase überführt wird, ein Teil des Wasserdampfes in Form von Tröpfchen kondensiert und Polymerpartikel erhalten werden, in denen noch organisches Lösungsmittel vorliegt,
(ii) das im Zerstäuberbehälter erhaltene Gemisch wird in einen Polymerentgasungsbehälter weitergeleitet und durchströmt den Polymerentgasungsbehälter, wobei das in den Polymerpartikeln vorliegende organische Lösungsmittel durch den thermischen Kontakt zwischen den Polymerpartikeln und dem Wasserdampf zumindest teilweise aus den Polymerpartikeln ausgetrieben und in die Gasphase überführt wird,
(iii) das den Polymerentgasungsbehälter verlassende Gemisch wird in einen Phasenseparator 1 weitergeleitet und in dem Phasenseparator 1 wird das in der Gasphase vorliegende organische Lösungsmittel und, sofern noch vorhanden, der Wasserdampf, von den Polymerpartikeln und dem kondensierten Wasserdampf getrennt,
(iv) die abgetrennten Polymerpartikel und der abgetrennte kondensierte Wasserdampf aus Schritt (iii) werden in einen Phasenseparator 2 weitergeleitet und in dem Phasenseparator 2 werden die Polymerpartikel von dem kondensierten Wasserdampf abgetrennt.

Im Rahmen der vorliegenden Erfindung versteht man unter "Wasserdampf" Wasser in gasförmigem Zustand.

Das erfindungsgemäße Verfahren ist für eine Vielzahl unterschiedlicher Polymere und Polymerlösungen anwendbar.

Beispielsweise kann es sich bei dem Polymer um ein Elastomer, einen Thermoplasten oder um ein Gemisch dieser Polymere handeln.

Als beispielhafte Elastomere können Polybutadien, statistische Copolymere aus Styrol und Butadien sowie EP(D)M genannt werden.

Als beispielhafte Thermoplasten können Poly(meth)acrylate wie PMMA genannt werden.

Geeignete organische Lösungsmittel für Polymere sind dem Fachmann grundsätzlich bekannt. Je nach Art des Polymers kann es sich um ein polares oder ein unpolares Lösungsmittel oder auch um Gemische dieser Lösungsmittel handeln. Als beispielhafte unpolare Lösungsmittel können aliphatische oder cycloaliphatische Lösungsmittel oder Gemische davon genannt werden. Als beispielhafte polare Lösungsmittel können Ether oder Essigsäurealkyllester (z.B. längerkettige Essigsäurealkyllester) genannt werden. Üblicherweise handelt es sich bei der in Schritt (i) verwendeten Polymerlösung um die am Ende einer Lösungspolymerisation erhaltene Polymerlösung, aus der dann mit Hilfe des erfindungsgemäßen Verfahrens das Polymer abgetrennt werden soll.

Im Rahmen der vorliegenden Erfindung kann die in den Zerstäuberbehälter eingebrachte Polymerlösung neben dem organischen Lösungsmittel auch Wasser enthalten. Wichtig ist nur, dass das organische Lösungsmittel in einer Menge vorliegt, um das Polymer zumindest teilweise zu lösen oder zu dispergieren.

Der Feststoffanteil der in Schritt (i) verwendeten Polymerlösung kann im Rahmen der vorliegenden Erfindung über einen breiten Bereich variiert werden und beträgt beispielsweise 5-40 Gew%, bevorzugter 10-30 Gew% oder 12-25 Gew%.

Wie oben erwähnt, wird in Schritt (i) des erfindungsgemäßen Verfahrens die Polymerlösung oder -dispersion durch in Kontakt bringen mit Wasserdampf zerstäubt. Eine solche Zerstäubung unter Verwendung von Wasserdampf sowie hierfür geeignete Vorrichtungselemente sind dem Fachmann grundsätzlich bekannt.

Beispielsweise kann die Polymerlösung mit dem Wasserdampf in einer Mehrstoffdüse (wie einer Zweistoff- oder Dreistoffdüse) in Kontakt gebracht werden. Sofern neben der Polymerlösung und dem Wasserdampf noch weitere, optionale Komponenten in den Zerstäuberbehälter eingebracht werden sollen, kann eine Dreistoffdüse bevorzugt sein. Bei einer solchen optionalen Komponente kann es sich beispielsweise um Waschwasser handeln, dem gegebenenfalls noch weitere Additive zugesetzt sein können.

Die Öffnung, über die der Wasserdampf in den Zerstäuberbehälter eingeleitet wird, kann unterschiedliche Formen aufweisen. Beispielsweise kann diese Öffnung kreisförmig oder oval oder alternativ auch schlitzförmig sein. Im Rahmen der vorliegenden Erfindung ist es möglich, dass der Wasserdampf nur über eine Öffnung oder alternativ über zwei oder mehr Öffnungen in den Zerstäuberbehälter eingeleitet wird.

Das Einleiten der Polymerlösung in den Zerstäuberbehälter kann über gängige, dem Fachmann bekannte Vorrichtungselemente erfolgen. Beispielsweise kann die Polymerlösung über Bohrungen in der Wand des Zerstäuberbehälters, bevorzugt zylindrische und/oder konische Bohrungen, in den Zerstäuberbehälter eingeleitet werden.

In Abhängigkeit von Polymertyp und Polymerkonzentration hat sich ein Bohrungsdurchmesser von 0,1 bis 8 mm, bevorzugter 0,5 bis 6 mm oder 1,0 bis 5,0 mm als zweckmäßig erwiesen. Andere Bohrungsdurchmesser sind jedoch im Rahmen der vorliegenden Erfindung ebenfalls verwendbar.

In einer bevorzugten Ausführungsform erfolgt der Eintritt der Polymerlösung in den Zerstäuberbehälter unter einem Winkel von 45-100°, bevorzugter 60-95°, noch bevorzugter 80-90° zum Eintritt des Wasserdampfes in den Zerstäuberbehälter. Durch diese relative Orientierung zueinander kann eine verbesserte Zerstäubung der Polymerlösung realisiert werden.

Prinzipiell können aber in dem erfindungsgemäßen Verfahren der Eintritt der Polymerlösung und der Eintritt des Wasserdampfes in den Zerstäuberbehälter auch parallel ausgerichtet sein, sofern dieses in Kontakt bringen noch zu einer ausreichenden Zerstäubung der Polymerlösung führt.

Durch das in Kontakt bringen der Polymerlösung mit dem Wasserdampf wird einerseits eine Zerstäubung der Polymerlösung erzielt und außerdem findet ein Transfer thermischer Energie von dem heißen Wasserdampf auf das organische Lösungsmittel statt. Dies wiederum bewirkt, dass ein Teil des organischen Lösungsmittels in die Gasphase überführt wird und ein Teil des Wasserdampfes in Form von Tröpfchen kondensiert. Weiterhin bilden sich aufgrund der Überführung von organischem Lösungsmittel in die Gasphase Polymerpartikel aus. Der thermische Energietransfer von dem Wasserdampf auf die Polymerlösung ist jedoch noch nicht ausreichend, um bereits im Zerstäuberbehälter in Schritt (i) Polymerpartikel mit dem gewünscht niedrigen Gehalt an organischem Lösungsmittel (wie z.B. von gesetzlichen Bestimmungen gefordert) zu erhalten. In den im Zerstäuberbehälter erhaltenen Polymerpartikeln liegt also noch organisches Lösungsmittel vor, das in einem oder mehreren nachgeschalteten Schritten erst noch zu entfernen ist.

Druck und Temperatur des in den Zerstäuberbehälter eingeleiteten Wasserdampfes können über einen breiten Bereich variiert werden. Ebenso kann das Masseverhältnis von Wasserdampf und Polymerlösung über einen breiten Bereich variiert werden.

Wichtig ist jedoch, dass der Wasserdampf in Schritt (i) nicht vollständig kondensiert und somit in dem nachfolgenden Schritt (ii) in dem Polymerentgasungsbehälter noch Wasserdampf für einen Transfer thermischer Energie auf die Polymerpartikel zur Verfügung steht.

Bei dem in den Zerstäuberbehälter eingeleiteten Wasserdampf kann es sich beispielsweise um Sattdampf oder auch um überhitzten Wasserdampf handeln. Der in den Zerstäuberbehälter eingeleitete Wasserdampf kann beispielsweise einen Druck im Bereich von 3 bar bis 25 bar, bevorzugter 10 bar bis 20 bar oder 15 bar bis 17 bar aufweisen.

Ein geeignetes Masseverhältnis von Wasserdampf zu Polymerlösung in Schritt (i) liegt beispielsweise im Bereich von 0,2 bis 3, bevorzugter im Bereich von 0,3 bis 1,5, noch bevorzugter im Bereich von 0,4 bis 1,2.

Die Größe der in dem Zerstäuberbehälter gebildeten Polymerpartikel lässt sich durch geeignete Variation der Zerstäubungsbedingungen (z.B. Düsengeometrien, Düsenanordnung, Dampfgeschwindigkeiten, zusätzliches Waschwasser gegebenenfalls mit Hilfsstoffen usw.) einstellen. Dies ist dem Fachmann grundsätzlich bekannt.

Im Rahmen der vorliegenden Erfindung kann der mittlere Durchmesser der in dem Zerstäuberbehälter gebildeten Polymerpartikel über einen breiten Bereich variiert werden und liegt beispielsweise im Bereich von 0,01-5 mm, bevorzugter 0,5-3 mm oder 1,0-1,5 mm. Die Bestimmung des mittleren Partikeldurchmessers erfolgt durch bildanalytische Auswerteverfahren, beispielsweise durch optische Auswertung unter einem Lichtmikroskop mit Skalierung. Hierzu können Polymerpartikel beim Verlassen des Zerstäuberbehälters abgetrennt und unter dem Lichtmikroskop untersucht werden. Der Durchmesser eines Polymerpartikels ergibt sich als die größte Ausdehnung der unter dem Mikroskop erkennbaren Projektionsfläche des Partikels. Über eine ausreichend große Zahl von Polymerpartikeln gemittelt ergibt sich der mittlere Partikeldurchmesser.

Mittlere Partikeldurchmesser, die unterhalb oder oberhalb der oben angegebenen bevorzugten Bereiche liegen, sind in dem erfindungsgemäßen Verfahren ebenso verwendbar. Die Ausdampfung des in den Polymerpartikeln noch vorliegenden organischen Lösungsmittels kann jedoch in Schritt (ii) weiter optimiert werden, wenn der mittlere Durchmesser der im Zerstäuberbehälter gebildeten Partikel in den oben angegebenen bevorzugten Bereichen liegt.

Durch die Zerstäubung im Zerstäuberbehälter in Schritt (i) wird ein dreiphasiges, also feste, gasförmige und flüssige Komponenten enthaltendes Gemisch erhalten. Dieses dreiphasige Gemisch umfasst zumindest Wasserdampf, gasförmiges (d.h. durch die Zerstäubung verdampftes) organisches Lösungsmittel, kondensierten Wasserdampf in Form von Tröpfchen und feste Polymerpartikel, in denen noch organisches Lösungsmittel vorliegt.

Wie oben ausgeführt, wird in Schritt (ii) des erfindungsgemäßen Verfahrens das im Zerstäuberbehälter erhaltene Gemisch in einen Polymerentgasungsbehälter weitergeleitet und durchströmt den Polymerentgasungsbehälter, wobei das in den Polymerpartikeln vorliegende organische Lösungsmittel durch den thermischen Kontakt zwischen den Polymerpartikeln und dem Wasserdampf zumindest teilweise aus den Polymerpartikeln ausgetrieben und in die Gasphase überführt wird.

Da das in dem Zerstäuberbehälter in Schritt (i) erhaltene Gemisch noch Wasserdampf enthält, steht dieser Wasserdampf in Schritt (ii) im Polymerentgasungsbehälter für einen weiteren thermischen Energietransfer auf die Polymerpartikel zur Verfügung. Im Rahmen der vorliegenden Erfindung wurde festgestellt, dass durch diesen direkten thermischen Kontakt zwischen Polymerpartikeln und Wasserdampf im Polymerentgasungsbehälter das in den Polymerpartikeln noch vorliegende organische Lösungsmittel sehr effektiv ausgedampft werden kann.

Damit es zu einem thermischen Kontakt zwischen den Polymerpartikeln und dem Wasserdampf kommt, sind die Temperatur- und Druckbedingungen in dem Polymerentgasungsbehälter bevorzugt so zu wählen, dass der kondensierte Wasserdampf in Tröpfchenform vorliegt und sich nicht zu einer einheitlichen flüssigen Phase vereinigt, in der die Polymerpartikel dispergiert wären. Das Einstellen solcher Bedingungen ist dem Fachmann unter Berücksichtigung seines allgemeinen Fachwissens ohne weiteres möglich. Beispielhaft können in diesem Zusammenhang eine Temperatur im Bereich von 100-140°C oder 100-130°C und ein Druck im Bereich von 1-4 bar abs. oder 1-3 bar abs. genannt werden.

Die Abmessungen und die Geometrie des Polymerentgasungsbehälters können über einen breiten Bereich variiert werden. Als zweckmäßig hat sich beispielsweise ein Polymerentgasungsbehälter erwiesen, der zumindest abschnittsweise, bevorzugt über seine gesamte Länge hinweg rohrförmig ist. Eine geeignete Länge eines solchen Polymerentgasungsbehälters, bevorzugt rohrförmigen Polymerentgasungsbehälters, beträgt beispielsweise 0,5-30,0 m, bevorzugter 2,0-20,0 m oder 4,0-10,0 m. Ein geeigneter Durchmesser liegt beispielsweise im Bereich von 15-150 mm, bevorzugter 25-100 mm oder 40-80 mm.

Bevorzugt wird der Entgasungsbehälter so betrieben, dass das zerstäubte Gemisch aus Schritt (i) den Entgasungsbehälter kontinuierlich durchströmt und dabei das in den Polymerpartikeln vorliegende organische Lösungsmittel durch thermischen Kontakt mit dem Wasserdampf zumindest teilweise ausgetrieben wird und der kondensierte Wasserdampf in dieser Strömung bevorzugt in Tröpfchenform vorliegt.

Da sich das in den Polymerpartikeln noch verbliebene organische Lösungsmittel durch thermischen Kontakt mit dem Wasserdampf sehr effektiv ausdampfen lässt, kann für den Polymerentgasungsbehälter eine relativ geringe mittlere Verweilzeit gewählt werden, was wiederum die thermische Belastung der Polymerpartikel reduziert.

Um einen möglichst vollständigen Transfer der thermischen Energie des Wasserdampfs auf die Polymerpartikel zu ermöglichen, wird andererseits die mittlere Verweilzeit im Polymerentgasungsbehälter bevorzugt ausreichend lang gewählt, so dass das den Polymerentgasungsbehälter verlassende Gemisch einen möglichst geringen Wasserdampfgehalt aufweist.

Bevorzugt beträgt die mittlere Verweilzeit im Polymerentgasungsbehälter 0,1-10 Sekunden, bevorzugter 0,1-7 Sekunden oder 0,1-4 Sekunden.

Im Rahmen der vorliegenden Erfindung wird der Begriff "mittlere Verweilzeit" in seiner dem Fachmann geläufigen Bedeutung verwendet und ergibt sich daher aus dem Quotienten des Volumens des Polymerentgasungsbehälters zum austretenden Volumenstrom.

Für die nachfolgende weitere Verarbeitung der Polymerpartikel kann es vorteilhaft sein, dass deren mittlerer Partikeldurchmesser während ihres Aufenthaltes im Polymerentgasungsbehälter durch Agglomeration von Partikeln zunimmt. Beim Verlassen des Polymerentgasungsbehälters beträgt der mittlere Durchmesser der Polymerpartikel bevorzugt 0,5-40 mm, bevorzugter 2 bis 20 mm oder 5-10 mm. Hinsichtlich der Partikelgrößenbestimmung kann auf die obigen Ausführungen verwiesen werden, d.h. die Bestimmung des mittleren Partikeldurchmessers erfolgt durch bildanalytische Auswerteverfahren, beispielsweise durch optische Auswertung unter einem Lichtmikroskop mit Skalierung. Hierzu können Polymerpartikel beim Verlassen des Polymerentgasungsbehälters abgetrennt und unter dem Lichtmikroskop untersucht werden. Sofern die im Zerstäuberbehälter gebildeten Polymerpartikel anschließend im Polymerentgasungsbehälter zu größeren Partikeln agglomerieren, weisen diese Partikel häufig eine "himbeerartige" Morphologie auf. Die Partikelgröße der den Polymerentgasungsbehälter verlassenden Polymerpartikel kann über die Verweilzeit im Entgasungsreaktor gesteuert werden. Je länger die mittlere Verweilzeit, desto höher ist die Wahrscheinlichkeit einer Agglomeration von einzelnen Partikeln unter Ausbildung größerer Partikel.

Wie oben ausgeführt, wird in Schritt (iii) des erfindungsgemäßen Verfahrens das den Polymerentgasungsbehälter verlassende Gemisch in einen Phasenseparator 1 weitergeleitet und in dem Phasenseparator 1 wird das in der Gasphase vorliegende organische Lösungsmittel und, sofern noch vorhanden, der Wasserdampf, von den Polymerpartikeln und dem kondensierten Wasserdampf getrennt.

Im Rahmen der vorliegenden Erfindung ist der Phasenseparator 1 also ein Behälter bzw. eine Vorrichtung zur Abtrennung der gasförmigen Komponenten von den flüssigen und festen Komponenten.

Geeignete Phasenseparatoren zur Abtrennung einer gasförmigen Phase von einer Flüssig- und Feststoffphase sind dem Fachmann grundsätzlich bekannt. Beispielhaft können an dieser Stelle Phasenseparatoren genannt werden, die mittels Fliehkrafttrennung arbeiten (Fliehkraftabscheider), z.B. ein Zyklon.

Das gasförmige organische Lösungsmittel und, sofern noch vorhanden, der Wasserdampf können den Phasenseparator 1 bevorzugt über Kopf verlassen, während die Polymerpartikel und der kondensierte Wasserdampf den Phasenseparator bevorzugt über einen Bodenauslass verlassen. Wie bereits oben erwähnt, weist das dem Phasenseparator 1 zugeführte Gemisch einen möglichst geringen Wasserdampfgehalt auf. Folglich ist es auch bevorzugt, dass die im Phasenseparator 1 abgetrennte gasförmige Phase einen möglichst geringen Wasserdampfgehalt aufweist.

Im Rahmen der vorliegenden Erfindung kann es bevorzugt sein, dass das aus dem Phasenseparator 1 abgetrennte gasförmige organische Lösungsmittel einem Kondensator zugeführt wird. In diesem Kondensator schlägt sich das organische Lösungsmittel nieder und kann einer Lösungsmittelaufarbeitung zugeführt werden.

Der Druck in dem Phasenseparator 1 kann über einen breiten Bereich variiert werden und liegt beispielsweise im Bereich von 0,1-10 bar abs, bevorzugter im Bereich von 0,5-3 bar abs oder 0,7-1,3 bar abs..

Da in Schritt (ii) des erfindungsgemäßen Verfahrens bereits eine sehr effektive Entgasung der Polymerpartikel stattgefunden hat, sind in den nachfolgenden Schritten keine längeren thermischen Behandlungen (z.B. in einem heißen, gerührten Wasserbad) mehr notwendig. Folglich ist es in Schritt (iii) nicht erforderlich, die Phasentrennung noch mit einem thermischen Behandlungsschritt zur weiteren Entgasung der Polymerpartikel zu kombinieren. Insbesondere ist es bevorzugt, dass die Polymerpartikel in Schritt (iii) nicht in einem heißen Wasserbad (z.B. in einem Rührkessel) zur weiteren Entgasung dispergiert werden. Es kann also bevorzugt sein, dass der Phasenseparator 1 kein Rührkessel (z.B. kein kontinuierlich betriebener Rührkessel) ist.

Es ist daher bevorzugt, dass die mittlere Verweilzeit in dem Phasenseparator 1 möglichst gering ist. Bevorzugt beträgt die Verweilzeit in dem Phasenseparator 1 weniger als 100 Sekunden, bevorzugter weniger als 20 Sekunden, noch bevorzugter weniger als 10 Sekunden oder sogar weniger als 5 Sekunden. Als geeignete Untergrenze für die mittlere Verweilzeit kann beispielsweise ein Wert von 0,5 Sekunden oder 2 Sekunden angegeben werden.

Wie oben ausgeführt, werden in Schritt (iv) des erfindungsgemäßen Verfahrens die abgetrennten Polymerpartikel und der abgetrennte kondensierte Wasserdampf aus Schritt (iii) in einen Phasenseparator 2 weitergeleitet und in dem Phasenseparator 2 werden die Polymerpartikel von dem kondensierten Wasserdampf abgetrennt.

Im Rahmen der vorliegenden Erfindung ist der Phasenseparator 2 also ein Behälter bzw. eine Vorrichtung zur Abtrennung der flüssigen Komponenten von den Feststoffkomponenten.

Geeignete Phasenseparatoren zur Abtrennung einer Feststoffphase wie z.B. Polymerpartikel von einer flüssigen Phase (z.B. kondensiertem Wasserdampf) sind dem Fachmann grundsätzlich bekannt.

Beispielsweise kann die Trennung erfolgen, indem die Polymerpartikel über eine flüssigkeitsdurchlässige Polymerauffangeinheit (z.B. ein Sieb) von der Flüssigkeit getrennt werden. Eine weitere bzw. ergänzende Möglichkeit ist die Komprimierung der Polymerpartikel und eine dadurch induzierte Verdrängung des kondensierten Wasserdampf (d.h. der flüssigen Phase).

In einer bevorzugten Ausführungsform umfasst der Phasenseparator 2 eine Polymerauffangeinheit (bevorzugt ein Sieb) und eine Polymerkomprimierungseinheit, die einen mehrwelligen, bevorzugt zweiwelligen Komprimierungsbereich und unmittelbar daran anschließend einen einwelligen Komprimierungsbereich aufweist. In dieser Polymerkomprimierungseinheit mit mehrwelligen und einwelligen Bereichen erfolgt die Komprimierung des Polymermaterials. Die Beschickung der Komprimierungseinheit mit den Polymerpartikeln erfolgt bevorzugt über den mehrwelligen Bereich. Als Wellen für die Polymerkomprimierungseinheit können beispielsweise Schneckenwellen verwendet werden.

In dieser bevorzugten Ausführungsform werden die Polymerpartikel auf der Polymerauffangeinheit (z.B. einem Sieb) abgeschieden und dann zunächst dem mehrwelligen, bevorzugt zweiwelligen Bereich der Polymerkomprimierungseinheit zugeführt (beispielsweise über eine Schrägstellung des Siebs). Bei dem mehrwelligen Bereich kann es sich beispielsweise um einen Komprimierungsbereich mit zwei oder mehr Schneckenwellen handeln. Diese Schneckenwellen können gleich- oder gegenläufig sein. Als Beispiel kann in diesem Zusammenhang ein Doppelschneckenextruder genannt werden.

Der Übergang von dem mehrwelligen Bereich in den einwelligen Bereich wird bevorzugt dadurch bewerkstelligt, dass sich lediglich eine Welle über die gesamte Länge der Polymerkomprimierungseinheit erstreckt, während sich die andere Welle bzw. die anderen Wellen nur über einen Teilbereich der Polymerkomprimierungseinheit erstreckt bzw. erstrecken.

Bevorzugt beginnen alle Wellen an dem Ende der Polymerkomprimierungseinheit, an dem die auf der Auffangeinheit (z.B. dem Sieb) abgeschiedenen Polymerpartikel zugeführt werden. Nur eine dieser Wellen erstreckt sich bis zum anderen Ende der Polymerkomprimierungseinheit. Es wurde festgestellt, dass durch den mehrwelligen Aufbau im Beschickungsbereich der Einzug des Polymers in die Polymerkomprimierungseinheit optimiert wird, während der einwellige Aufbau im hinteren Teil der Polymerkomprimierungseinheit einen besseren Druckaufbau und damit eine bessere Komprimierung des Polymermaterials ermöglicht.

An dem Ausgang der Polymerkomprimierungseinheit kann eine Schneideinheit zur Erzeugung von Polymerteilchen einheitlicher Größe, beispielsweise im Bereich von 0,5-20 mm, bevorzugter 1-10 mm oder 2-5 mm, angebracht sein.

Anschließend können die Polymerteilchen noch mit einer gängigen Trocknungsvorrichtung auf die gewünschte Restfeuchte getrocknet werden.

Die im Phasenseparator 2 abgetrennte flüssige Phase kann abgesaugt und in einen Tank gepumpt werden. Hier können der flüssigen Phase Hilfsstoffe zugesetzt werden, die die Teilchenbildung im Zerstäuberbehälter beeinflussen. Von diesem Tank aus kann die flüssige Phase gegebenenfalls als Waschwasser zurückgeführt bzw. anteilig ausgekreist werden.

Weiterhin dient der Phasenseparator 2 auch zur Abdichtung des verfahrenstechnischen Aufbaus zur Atmosphäre.

Auch in dem Phasenseparator 2 kann eine relativ geringe mittlere Verweilzeit verwendet werden. Bevorzugt beträgt die mittlere Verweilzeit im Phasenseparator 2 1 Sekunde bis 100 Sekunden, bevorzugter 5 Sekunden bis 20 Sekunden.

Obwohl im Rahmen der vorliegenden Erfindung nicht ausgeschlossen ist, dass zwischen den Schritten (i)-(iv) noch weitere Behandlungsschritte vorgesehen sein können, ist es bevorzugt, dass die einzelnen Schritte (i)-(iv) unmittelbar aufeinander folgen.

In dem erfindungsgemäßen Verfahren führen die kurze Verweildauer des Polymers im verfahrenstechnischen Aufbau und die damit verbunden sehr geringen Verweilzeiten vom Eintritt in den Zerstäuberraum bis zum Verlassen des zweiten Phasenseparators zu einer Produktschonung, insbesondere bei temperatursensitiven Polymeren. Die Anlage kann sehr kompakt ausgestaltet werden, was zu einer großen Platzersparnis führt. Das Verfahren läuft auch bei geringen Durchsätzen sehr stabil, wodurch sich kleine Dimensionen realisieren lassen. Die Anlage lässt sich in ihrer Konfiguration sehr schnell ändern und ist somit ohne großen Zeitverlust bei Produktwechseln umzurüsten. Dazu kommt eine deutliche Reduzierung des Reinigungsaufwandes.

Gemäß eines weiteren Aspektes betrifft die vorliegende Erfindung eine Vorrichtung bzw. Anlage zur Abtrennung eines Polymers aus einer Polymerlösung oder - dispersion, umfassend
(a) einen Zerstäuberbehälter,
(b) einen Polymerentgasungsbehälter,
(c) einen ersten Phasenseparator zur Abtrennung einer gasförmigen Phase von einer Flüssig- und Feststoffphase,
(d) einen zweiten Phasenseparator zur Abtrennung einer Flüssigphase von einer Feststoffphase.

Hinsichtlich des Zerstäuberbehälters kann auf die obigen Ausführungen verwiesen werden.

Der Zerstäuberbehälter weist ein oder mehrere Vorrichtungselemente für das in Kontakt bringen einer Polymerlösung mit Wasserdampf auf. Solche Vorrichtungselemente sind dem Fachmann grundsätzlich bekannt. Beispielsweise kann hierfür eine Mehrstoffdüse (z.B. Zweistoff- oder Dreistoffdüse) verwendet werden.

Die Öffnung, über die der Wasserdampf in den Zerstäuberbehälter eingeleitet wird, kann unterschiedliche Formen aufweisen. Beispielsweise kann diese Öffnung kreisförmig oder oval oder alternativ auch schlitzförmig sein. Im Rahmen der vorliegenden Erfindung ist es möglich, dass der Wasserdampf nur über eine Öffnung oder alternativ über zwei oder mehr Öffnungen in den Zerstäuberbehälter eingeleitet wird. Für das Einleiten der Polymerlösung in den Zerstäuberbehälter können Bohrungen in der Wand des Zerstäuberbehälters, bevorzugt zylindrische und/oder konische Bohrungen, angebracht sein. Ein Bohrungsdurchmesser von 0,1 bis 8 mm, bevorzugter 0,5 bis 6 mm oder 1,0 bis 5,0 mm hat sich als zweckmäßig erwiesen. Andere Bohrungsdurchmesser sind jedoch im Rahmen der vorliegenden Erfindung ebenfalls verwendbar.

In einer bevorzugten Ausführungsform sind die Vorrichtungselemente für das Einbringen der Polymerlösung und des Wasserdampfes so angeordnet, dass der Eintritt der Polymerlösung in den Zerstäuberbehälter unter einem Winkel von 45-100°, bevorzugter 60-95°, noch bevorzugter 80-90° zum Eintritt des Wasserdampfes in den Zerstäuberbehälter erfolgt.

Hinsichtlich des Polymerentgasungsbehälters kann auf die oben gemachten Ausführungen verwiesen werden.

Die Abmessungen und die Geometrie des Polymerentgasungsbehälters können über einen breiten Bereich variiert werden. Als zweckmäßig hat sich beispielsweise ein rohrförmiger Polymerentgasungsbehälter erwiesen. Eine geeignete Länge eines solchen rohrförmigen Polymerentgasungsbehälters beträgt beispielsweise 0,5-30,0 m, bevorzugter 2,0-20,0 m oder 4,0-10,0 m. Ein geeigneter Durchmesser liegt beispielsweise im Bereich von 15-150 mm, bevorzugter 25-100 mm oder 40-80 mm.

Hinsichtlich des ersten Phasenseparators (d.h. Phasenseparator 1) zur Abtrennung einer gasförmigen Phase von einer Flüssig- und Feststoffphase kann auf die oben gemachten Ausführungen verwiesen werden.

Geeignete Phasenseparatoren zur Abtrennung einer gasförmigen Phase von einer Flüssig- und Feststoffphase sind dem Fachmann grundsätzlich bekannt. Beispielhaft können an dieser Stelle Phasenseparatoren genannt werden, die mittels Fliehkrafttrennung arbeiten (Fliehkraftabscheider), z.B. ein Zyklon.

Bevorzugt ist der erste Phasenseparator so ausgestaltet, dass gasförmige Komponenten den Phasenseparator über Kopf und flüssige Phasen bzw. Feststoffphasen den Phasenseparator über einen Bodenauslass verlassen können. Wie oben erwähnt, umfasst die Vorrichtung einen zweiten Phasenseparator (d.h. Phasenseparator 2) zur Abtrennung einer Flüssigphase von einer Feststoffphase. Hinsichtlich der bevorzugten Eigenschaften dieses Phasenseparators 2 kann ebenfalls auf die oben gemachten Ausführungen verwiesen werden.

Bevorzugt enthält der zweite Phasenseparator eine Polymerkomprimierungseinheit, die einen mehrwelligen, bevorzugt zweiwelligen Komprimierungsbereich und unmittelbar daran anschließend einen einwelligen Komprimierungsbereich aufweist.

In einer bevorzugten Ausführungsform umfasst der Phasenseparator 2 eine Polymerauffangeinheit (bevorzugt ein Sieb) und eine Polymerkomprimierungseinheit, die einen mehrwelligen, bevorzugt zweiwelligen Komprimierungsbereich und unmittelbar daran anschließend einen einwelligen Komprimierungsbereich aufweist. In dieser Polymerkomprimierungseinheit mit mehrwelligen und einwelligen Bereichen erfolgt die Komprimierung des Polymermaterials. Die Polymerauffangeinheit und die Polymerkomprimierungseinheit sind bevorzugt so zueinander angeordnet, dass die Beschickung der Komprimierungseinheit mit dem Polymer im mehrwelligen Bereich erfolgt und das Polymer die Fördereinheit über den einwelligen Bereich verlässt. Als Wellen können beispielsweise Schneckenwellen verwendet werden.

In der Polymerkomprimierungseinheit ist es bevorzugt, dass sich lediglich eine Welle über die gesamte Länge der Polymerkomprimierungseinheit erstreckt, während sich die andere Welle bzw. die anderen Wellen nur über einen Teilbereich der Polymerkomprimierungseinheit erstreckt bzw. erstrecken. Bevorzugt beginnen alle Wellen an dem Ende der Polymerkomprimierungseinheit, an dem das Polymer zugeführt wird. Nur eine dieser Wellen erstreckt sich bis zum anderen Ende der Polymerkomprimierungseinheit.

An dem Ausgang oder in der Nähe des Ausgangs der Polymerkomprimierungseinheit kann eine Schneideinheit zur Erzeugung von Polymerteilchen einheitlicher Größe, beispielsweise im Bereich von 0,5-20 mm, bevorzugter 1-10 mm oder 2-5 mm, angebracht sein.

Die Komponenten (a) - (d) sind bevorzugt so zueinander angeordnet, dass bei der Durchführung eines Abtrennungsverfahrens ein Polymer diese Komponenten in der Reihenfolge (a) → (b) → (c) → (d) durchlaufen kann.

Anhand der nachfolgenden Beispiele wird die vorliegende Erfindung eingehender erläutert.

### Beispiele

### Beispiel 1:

100 kg/h Lösung aus einem aliphatischen Lösungsmittel und einem darin gelöstem thermoplastischen Elastomer mit einem Feststoffgehalt 12,5 Gew% wird in einer Zweistoffdüse mit überhitztem Wasserdampf von ca. 16 bar versetzt. Das Massenverhältnis von Wasserdampf zu Polymerlösung beträgt ca. 0,86. Bei dieser Zerstäubung im Zerstäubungsbehälter wird das Lösungsmitel verdampft, während Wasserdampf kondensiert. Allerdings ist die Kondensation des Wasserdampfes unvollständig. Man erhält im Zerstäuberbehälter ein Dreiphasengemisch, das verdampftes gasförmiges organisches Lösungsmittel, Wasserdampf, kondensierten Wasserdampf in Tröpfchenform und Polymerpartikel umfasst. In den Polymerpartikeln liegt noch organisches Lösungsmittel vor.

Das Dreiphasengemisch aus dem Zerstäuberbehälter wird durch einen Rohrreaktors der Länge 8 m und der Dimensionierung 55,1 mm geleitet. Dieser Rohrreaktor fungiert für die Polymerpartikel als Entgasungsbehälter. Während das Gemisch den rohrförmigen Entgasungsbehälter durchströmt, stehen die Polymerpartikel in thermischen Kontakt mit dem noch vorhandenen Wasserdampf, wodurch organisches Lösungsmittel, das sich noch in diesen Polymerpartikeln befindet, ausgedampft und in die Gasphase überführt wird. Die mittlere Verweilzeit in dem rohrförmigen Polymerentgasungsbehälter beträgt ca. 0,2 Sekunden.

Anschließend werden in einem Zyklon, der als Phasenseparator 1 fungiert, das gasförmige Lösungsmittel und der Überschusswasserdampf bei Drücken von 0,95 barabs getrennt. Das abgetrennte organische Lösungsmittel wird in einem geeigneten Kondensator bei Kaltwassertemperaturen zwischen 6 und 10 °C niedergeschlagen. Die Polymerpartikel und der kondensierte Wasserdampf werden über einen Bodenauslass abgetrennt und einem zweiten Phasenseparator zugeführt.

In dem zweiten Phasenseparator werden die Polymerpartikel auf einem Sieb gesammelt und dem zweiwelligen Ende der Polymerkomprimierungseinheit zugeführt. Nur eine dieser Wellen erstreckt sich über die gesamte Länge der Polymerkomprimierungseinheit, so dass das Polymermaterial nach Verlassen des zweiwelligen Komprimierungsbereichs in einen einwelligen Komprimierungsbereich gelangt und über diesen die Polymerkomprimierungseinheit verlässt. Beim Verlassen der Polymerkomprimierungseinheit wird das Polymer durch eine Schneideeinheit in Polymerteilchen einheitlicher Größe von 5 mm geschnitten. Der Phasenseparator dient der Trennung der flüssigen Phase von dem Polymer, der Rückführung des Dampfkondensates in den Aufarbeitungskreislauf sowie der drucktechnischen Abdichtung des Systems.

### Beispiel 2:

200 kg/h Kautschuklösung aus einem cycloaliphatischen Lösungsmittel mit einem Feststoffgehalt von 15 % wird in einer Dreistoffdüse mit überhitztem Wasserdampf mit einem Druck von ca. 16 bar sowie mit konditioniertem Waschwasser mit einer Temperatur von ca. 85 °C versetzt. Das Massenverhältnis Wasserdampf zu Polymerlösung beträgt 1,15, das Verhältnis Massenstrom Waschwasser zu Kautschuklösung beträgt 3,50. Bei dieser Zerstäubung im Zerstäubungsbehälter wird das Lösungsmittel verdampft, während Wasserdampf kondensiert. Allerdings ist die Kondensation des Wasserdampfes unvollständig. Man erhält im Zerstäuberbehälter ein Dreiphasengemisch, das verdampftes gasförmiges organisches Lösungsmittel, Wasserdampf, kondensierten Wasserdampf in Tröpfchenform und Polymerpartikel umfasst. In den Polymerpartikeln liegt noch organisches Lösungsmittel vor.

Das Dreiphasensystem wird durch einen Rohrreaktors der Länge 4,0 m und der Dimensionierung 44,3 mm geleitet. Dieser Rohrreaktor fungiert für die Polymerpartikel als Entgasungsbehälter. Während das Gemisch den rohrförmigen Entgasungsbehälter durchströmt, stehen die Polymerpartikel in thermischen Kontakt mit dem noch vorhandenen Wasserdampf, wodurch organisches Lösungsmittel, das sich noch in diesen Polymerpartikeln befindet, ausgedampft und in die Gasphase überführt wird. Die mittlere Verweilzeit in dem rohrförmigen Polymerentgasungsbehälter beträgt ca. 0,1 Sekunde.

Anschließend werden in einem Zyklon, der als Phasenseparator 1 fungiert, das gasförmige Lösungsmittel und der Überschusswasserdampf vom Waschwasser, von kondensiertem Wasserdampf und den Polymerpartikeln bei einem Druck von 0,85 barabs getrennt. Das abgetrennte organische Lösungsmittel wird in einem geeigneten Kondensator bei Kaltwassertemperaturen zwischen 6 und 10°C niedergeschlagen. Die Polymerpartikel und der kondensierte Wasserdampf werden über einen Bodenauslass abgetrennt und einem zweiten Phasenseparator zugeführt.

In dem zweiten Phasenseparator werden die Polymerpartikel auf einem Sieb gesammelt und dem zweiwelligen Ende der Polymerkomprimierungseinheit zugeführt. Nur eine dieser Wellen erstreckt sich über die gesamte Länge der Polymerkomprimierungseinheit, so dass das Polymermaterial nach Verlassen des zweiwelligen Komprimierungsbereichs in einen einwelligen Komprimierungsbereich gelangt und über diesen die Polymerkomprimierungseinheit verlässt. Beim Verlassen der Polymerkomprimierungseinheit wird das Polymer durch eine Schneideeinheit in Polymerteilchen einheitlicher Größe von 3 mm geschnitten. Der Phasenseparator dient der Trennung der flüssigen Phase von dem Polymer, der Rückführung des Dampfkondensates und des Waschwassers in den Aufarbeitungskreislauf zur energetischen und ökologischen Optimierung sowie der drucktechnischen Abdichtung des Systems.

## Patentansprüche

1. Ein Verfahren zur Abtrennung eines Polymers aus einer Polymerlösung oder -dispersion, folgende Schritte umfassend:
(i) eine Lösung oder Dispersion eines Polymers in einem organischen Lösungsmittel wird durch in Kontakt bringen mit Wasserdampf in einem Zerstäuberbehälter zerstäubt, wobei ein Teil des organischen Lösungsmittels in die Gasphase überführt wird, ein Teil des Wasserdampfes in Form von Tröpfchen kondensiert und Polymerpartikel erhalten werden, in denen noch organisches Lösungsmittel vorliegt,
(ii) das im Zerstäuberbehälter erhaltene Gemisch wird in einen Polymerentgasungsbehälter weitergeleitet und durchströmt den Polymerentgasungsbehälter, wobei das in den Polymerpartikeln vorliegende organische Lösungsmittel durch den thermischen Kontakt zwischen den Polymerpartikeln und dem Wasserdampf zumindest teilweise aus den Polymerpartikeln ausgetrieben und in die Gasphase überführt wird,
(iii) das den Polymerentgasungsbehälter verlassende Gemisch wird in einen Phasenseparator 1 weitergeleitet und in dem Phasenseparator 1 wird das in der Gasphase vorliegende organische Lösungsmittel und, sofern noch vorhanden, der Wasserdampf, von den Polymerpartikeln und dem kondensierten Wasserdampf getrennt,
(iv) die abgetrennten Polymerpartikel und der abgetrennte kondensierte Wasserdampf aus Schritt (iii) werden in einen Phasenseparator 2 weitergeleitet und in dem Phasenseparator 2 werden die Polymerpartikel von dem kondensierten Wasserdampf abgetrennt.

2. Das Verfahren nach Anspruch 1, wobei die Polymerlösung mit dem Wasserdampf in einer Mehrstoffdüse in Kontakt gebracht wird.

3. Das Verfahren nach Anspruch 1 oder 2, wobei der Eintritt der Polymerlösung in den Zerstäuberbehälter unter einem Winkel von 45-100 ° zum Eintritt des Wasserdampfes in den Zerstäuberbehälter erfolgt.

4. Das Verfahren nach einem der vorstehenden Ansprüche, wobei der in den Zerstäuberbehälter eingeleitete Wasserdampf einen Druck im Bereich von 3-25 bar aufweist; und/oder das Masseverhältnis von Wasserdampf zu Polymerlösung in Schritt (i) im Bereich von 0,2-3 liegt.

5. Das Verfahren nach einem der vorstehenden Ansprüche, wobei der mittlere Durchmesser der im Zerstäuberbehälter gebildeten Polymerpartikel im Bereich von 0,01-5 mm liegt.

6. Das Verfahren nach einem der vorstehenden Ansprüche, wobei der Polymerentgasungsbehälter zumindest abschnittsweise rohrförmig ist; und/oder das zerstäubte Gemisch aus Schritt (i) den Polymerentgasungsbehälter kontinuierlich durchströmt und der kondensierte Wasserdampf in der Strömung in Tröpfchenform vorliegt.

7. Das Verfahren nach einem der vorstehenden Ansprüche, wobei die mittlere Verweilzeit in dem Polymerentgasungsbehälter 0,1-10 Sekunden beträgt.

8. Das Verfahren nach einem der vorstehenden Ansprüche, wobei die Trennung des in der Gasphase vorliegenden organischen Lösungsmittels und, sofern noch vorhanden, des Wasserdampfes von den Polymerpartikeln und dem kondensierten Wasserdampf im Phasenseparator 1 mittels Fliehkrafttrennung erfolgt.

9. Das Verfahren nach einem der vorstehenden Ansprüche, wobei die mittlere Verweilzeit in dem Phasenseparator 1 weniger als 100 Sekunden beträgt.

10. Das Verfahren nach einem der vorstehenden Ansprüche, wobei in Schritt (iv) die Trennung der Polymerpartikel von dem kondensierten Wasserdampf erfolgt, indem die Polymerpartikel komprimiert werden; und/oder wobei der Phasenseparator 2 eine Polymerauffangeinheit und eine Polymerkomprimierungseinheit, welche einen mehrwelligen Komprimierungsbereich und einen einwelligen Komprimierungsbereich enthält, umfasst.

11. Eine Anlage zur Abtrennung eines Polymers aus einer Polymerlösung oder - dispersion, umfassend
(a) einen Zerstäuberbehälter,
(b) einen Polymerentgasungsbehälter,
(c) einen ersten Phasenseparator zur Abtrennung einer gasförmigen Phase von einer Flüssig- und Feststoffphase,
(d) einen zweiten Phasenseparator zur Abtrennung einer Flüssigphase von einer Feststoffphase.

12. Die Anlage nach Anspruch 11, wobei der Zerstäuberbehälter Vorrichtungselemente für das Einbringen der Polymerlösung und des Wasserdampfes enthält und diese Vorrichtungselemente so angeordnet sind, dass der Eintritt der Polymerlösung in den Zerstäuberbehälter unter einem Winkel von 45-100 ° zum Eintritt des Wasserdampfes in den Zerstäuberbehälter erfolgt.

13. Die Anlage nach Anspruch 11 oder 12, wobei der Polymerentgasungsbehälter zumindest abschnittsweise rohrförmig ist.

14. Die Anlage nach einem der Ansprüche 11-13, wobei der erste Phasenseparator (c) ein Fliehkraft-Phasenseparator ist.

15. Die Anlage nach einem der Ansprüche 11-14, wobei der zweite Phasenseparator (d) eine Polymerkomprimierungseinheit enthält, die einen mehrwelligen und einen einwelligen Komprimierungsbereich aufweist,

16. Die Anlage nach Anspruch 15, wobei der zweite Phasenseparator (d) eine Polymerauffangeinheit enthält und die Polymerauffangeinheit und die Polymerkomprimierungseinheit so zueinander angeordnet sind, dass die Beschickung der Polymerkomprimierungseinheit mit einem Polymer im mehrwelligen Komprimierungsbereich erfolgen kann.

## Claims

1. Method for removing a polymer from a polymer solution or polymer dispersion, comprising the following steps:
(i) a solution or dispersion of a polymer in an organic solvent is atomized in an atomizer container by being brought into contact with water vapour, with part of the organic solvent being transferred into the gas phase, part of the water vapour condensing in the form of droplets, and polymer particles being obtained in which there is still organic solvent,
(ii) the mixture obtained in the atomizer container is conveyed into a polymer degassing container and flows through the polymer degassing container, with the organic solvent present in the polymer particles, as a result of the thermal contact between the polymer particles and the water vapour, being at least partially driven out of the polymer particles and transferred into the gas phase,
(iii) the mixture leaving the polymer degassing container is conveyed into a phase separator 1 and in the phase separator 1, the organic solvent present in the gas phase and, where still present, the water vapour are separated from the polymer particles and from the condensed water vapour,
(iv) the polymer particles removed and the condensed water removed, from step (iii), are conveyed into a phase separator 2 and in the phase separator 2, the polymer particles are removed from the condensed water vapour.

2. Method according to Claim 1, wherein the polymer solution is brought into contact with the water vapour in a multi-fluid nozzle.

3. Method according to Claim 1 or 2, wherein the polymer solution enters the atomizer container at an angle of 45-100° to the entry of the water vapour into the atomizer container.

4. Method according to any of the preceding claims, wherein the water vapour introduced into the atomizer container has a pressure in the range of 3-25 bar, and/or the mass ratio of water vapour to polymer solution in step (i) is in the range of 0.2-3.

5. Method according to any of the preceding claims, wherein the average diameter of the polymer particles formed in the atomizer container is in the range of 0.01-5 mm.

6. Method according to any of the preceding claims, wherein at least sections of the polymer degassing container are tubular, and/or the atomized mixture from step (i) flows continuously through the polymer degassing container and the condensed water vapour in the flow is in droplet form.

7. Method according to any of the preceding claims, wherein the average residence time in the polymer degassing container is 0.1-10 seconds.

8. Method according to any of the preceding claims, wherein the organic solvent present in the gas phase and, where still present, the water vapour are separated from the polymer particles and from the condensed water vapour in the phase separator 1 by centrifugal-force separation.

9. Method according to any of the preceding claims, wherein the average residence time in the phase separator 1 is less than 100 seconds.

10. Method according to any of the preceding claims, wherein the polymer particles are separated from the condensed water vapour in step (iv) by compression of the polymer particles, and/or wherein the phase separator 2 comprises a polymer collector unit and a polymer compressing unit which comprises a multi-shaft compression region and a single-shaft compression region.

11. System for removing a polymer from a polymer solution or polymer dispersion, comprising
(a) an atomizer container,
(b) a polymer degassing container,
(c) a first phase separator for removing a gaseous phase from a liquid phase and solid phase,
(d) a second phase separator for removing a liquid phase from a solid phase.

12. System according to Claim 11, wherein the atomizer container includes apparatus elements for introducing the polymer solution and the water vapour, and these apparatus elements are arranged in such a way that the polymer solution enters the atomizer container at an angle of 45-100° to the entry of the water vapour into the atomizer container.

13. System according to Claim 11 or 12, wherein at least sections of the polymer degassing container are tubular.

14. System according to any of Claims 11-13, wherein the first phase separator (c) is a centrifugal-force phase separator.

15. System according to any of Claims 11-14, wherein the second phase separator (d) includes a polymer compressing unit which has a multi-shaft and a single-shaft compression region.

16. System according to Claim 15, wherein the second phase separator (d) includes a polymer collecting unit, and the polymer collecting unit and the polymer compressing unit are arranged relative to one another in such a way that the polymer compressing unit can be charged with a polymer in the multi-shaft compression region.

## Revendications

1. Procédé de séparation d'un polymère d'une solution ou dispersion de polymère, comprenant les étapes suivantes :
(i) une solution ou une dispersion d'un polymère dans un solvant organique est atomisée par mise en contact avec de la vapeur d'eau dans un contenant d'atomiseur, une partie du solvant organique étant transféré dans la phase gazeuse, une partie de la vapeur d'eau étant condensée sous la forme de gouttelettes et des particules polymères étant obtenues, dans lesquelles se trouve encore du solvant organique,
(ii) le mélange obtenu dans le contenant d'atomiseur est acheminé dans un contenant de dégazage du polymère, et traverse le contenant de dégazage du polymère, le solvant organique présent dans les particules polymères étant au moins partiellement extrait des particules polymères par le contact thermique entre les particules polymères et la vapeur d'eau, et transféré dans la phase gazeuse,
(iii) le mélange quittant le contenant de dégazage du polymère est acheminé dans un séparateur de phases 1 et, dans le séparateur de phases 1, le solvant organique présent dans la phase gazeuse et, si elle est encore présente, la vapeur d'eau sont séparés des particules polymères et de la vapeur d'eau condensée,
(iv) les particules polymères séparées et la vapeur d'eau condensée séparée de l'étape (iii) sont acheminées dans un séparateur de phases 2 et, dans le séparateur de phases 2, les particules polymères sont séparées de la vapeur d'eau condensée.

2. Procédé selon la revendication 1, dans lequel la solution de polymère est mise en contact avec la vapeur d'eau dans une buse à plusieurs matières.

3. Procédé selon la revendication 1 ou 2, dans lequel l'entrée de la solution de polymère dans le contenant d'atomiseur a lieu à un angle de 45 à 100° par rapport à l'entrée de la vapeur d'eau dans le contenant d'atomiseur.

4. Procédé selon l'une quelconque des revendications précédentes, dans lequel la vapeur d'eau introduite dans le contenant d'atomiseur présente une pression dans la plage allant de 3 à 25 bar ; et/ou le rapport en masse entre la vapeur d'eau et la solution de polymère à l'étape (i) se situe dans la plage allant de 0,2 à 3.

5. Procédé selon l'une quelconque des revendications précédentes, dans lequel le diamètre moyen des particules polymères formées dans le contenant d'atomiseur se situe dans la plage allant de 0,01 à 5 mm.

6. Procédé selon l'une quelconque des revendications précédentes, dans lequel le contenant de dégazage du polymère est tubulaire au moins en sections ; et/ou le mélange atomisé de l'étape (i) traverse en continu le contenant de dégazage du polymère et la vapeur d'eau condensée se présente sous la forme de gouttelettes dans le courant.

7. Procédé selon l'une quelconque des revendications précédentes, dans lequel le temps de séjour moyen dans le contenant de dégazage du polymère est de 0,1 à 10 secondes.

8. Procédé selon l'une quelconque des revendications précédentes, dans lequel la séparation du solvant organique présent dans la phase gazeuse et, si elle est encore présente, de la vapeur d'eau des particules polymères et de la vapeur d'eau condensée dans le séparateur de phases 1 a lieu par séparation par force centrifuge.

9. Procédé selon l'une quelconque des revendications précédentes, dans lequel le temps de séjour moyen dans le séparateur de phases 1 est de moins de 100 secondes.

10. Procédé selon l'une quelconque des revendications précédentes, dans lequel, à l'étape (iv), la séparation des particules polymères de la vapeur d'eau condensée a lieu par compression des particules polymères ; et/ou dans lequel le séparateur de phases 2 comprend une unité de réception du polymère et une unité de compression du polymère, qui contient une zone de compression à plusieurs axes et une zone de compression à un axe.

11. Unité pour la séparation d'un polymère d'une solution ou dispersion de polymère, comprenant :
(a) un contenant d'atomiseur,
(b) un contenant de dégazage du polymère,
(c) un premier séparateur de phases pour la séparation d'une phase gazeuse d'une phase liquide et d'une phase solide,
(d) un deuxième séparateur de phases pour la séparation d'une phase liquide d'une phase solide.

12. Unité selon la revendication 11, dans laquelle le contenant d'atomiseur contient des éléments de dispositif pour l'introduction de la solution de polymère et de la vapeur d'eau, et ces éléments de dispositifs sont agencés de telle sorte que l'entrée de la solution de polymère dans le contenant d'atomiseur ait lieu à un angle de 45 à 100° par rapport à l'entrée de la vapeur d'eau dans le contenant d'atomiseur.

13. Unité selon la revendication 11 ou 12, dans laquelle le contenant de dégazage du polymère est tubulaire au moins en sections.

14. Unité selon l'une quelconque des revendications 11 à 13, dans laquelle le premier séparateur de phases (c) est un séparateur de phases à force centrifuge.

15. Unité selon l'une quelconque des revendications 11 à 14, dans laquelle le deuxième séparateur de phases (d) contient une unité de compression du polymère, qui comprend une zone de compression à plusieurs axes et une zone de compression à un axe.

16. Unité selon la revendication 15, dans laquelle le deuxième séparateur de phases (d) contient une unité de réception du polymère, et l'unité de réception du polymère et l'unité de compression du polymère sont agencées l'une par rapport à l'autre de telle sorte que l'alimentation de l'unité de compression du polymère avec un polymère puisse avoir lieu dans la zone de compression à plusieurs axes.
